# EUROPÄISCHE PATENTANMELDUNG

(11) **EP 0 649 598 A1**
(43) Veröffentlichungstag der Anmeldung: **26.04.1995**
(21) Anmeldenummer: 94115082.3
(22) Anmeldetag: 24.09.1994
(51) Int. Cl.: A23K 1/08, A23K 1/10, A23K 1/18

(54) **Tierfutter, insbesondere Alleinfutter für Katzen und Hunde**

(30) Priorität: 22.10.1993 DE 4336050
(71) Anmelder: Onken GmbH, D-47441 Moers (DE)
(72) Erfinder: Heinemann, Georg, D-45473 Mülheim (DE); Fedder, Horst, D-47608 Geldern (DE)
(74) Vertreter: Honke, Manfred, Dr.-Ing.

(57) **Zusammenfassung**

Es handelt sich um Alleinfutter für Katzen und Hunde, welches zum überwiegenden Anteil (mehr als 50 %) aus Milchbestandteilen und im übrigen aus Fleischbestandteilen oder Innereien besteht aber auch die Verwendung von Fleischersatz ist möglich.

## Beschreibung

Die Erfindung betrifft ein Tierfutter, insbesondere Alleinfutter für Katzen und Hunde.

Tierfutter für Katzen und Hunde sind in verschiedenen Ausführungsformen bekannt. Insbesondere sind Alleinfutter auf Fleischbasis bekannt.

Der Erfindung liegt die Aufgabe zugrunde, ein Tierfutter und insbesondere Alleinfutter für Katzen und Hunde zu schaffen, bei dem es sich um ein ernährungsphysiologisch optimal zusammengestelltes Produkt handelt.

Zur Lösung dieser Aufgabe ist das gattungsgemäße Tierfutter gekennzeichnet durch eine Zusammensetzung aus
50 bis 95 Gew.-%, vorzugsweise 75 Gew.-% Milchmasse,
5 bis 50 Gew.-%, vorzugsweise 25 Gew.-% Fleischbestandteile, z.B. Muskelfleisch und/oder Innereien wie z.B. Leber, Niere oder Pansen und/oder
5 bis 50 Gew.-%, vorzugsweise 25 Gew.-% Fleischersatz.

Diese Maßnahmen der Erfindung haben zur Folge, daß ein Tierfutter und insbesondere Alleinfutter für Hunde und Katzen auf Milchbasis verwirklicht wird, bei dem es sich in ernährungsphysiologischer Hinsicht um ein optimal zusammengestelltes Produkt handelt. Durch die Auswahl der verschiedenen Nährstoffquellen wie Milch, Fleisch, sonstige pflanzliche und tierische Rohstoffe wird eine optimale Nährstoffzusammensetzung in dem Produkt gewährleistet. Im Rahmen der Erfindung werden die wertvollen Bestandteile der Milch durch technologische Schritte für die Tierernährung optimal nutzbar gemacht. Tatsächlich tritt ein synergistischer Effekt durch die Kombination von Proteinen aus verschiedenen Quellen wie Milch, Fleisch und Pflanzen dahingehend auf, daß eine optimale biologische Wertigkeit erreicht wird. Das gilt auch in Kombination mit pflanzlichen Proteinen.

Nach einem Vorschlag der Erfindung mit selbständiger Bedeutung ist vorgesehen, daß die Milchmasse aus
62 bis 95 Gew.-%, vorzugsweise 85 Gew.-%, hydrolysierte und fermentierte Milch unter Verwendung von Fermentationsbakterien,
0 bis 10 Gew.-%, vorzugsweise 2,5 Gew.-%, pflanzliches Öl, z.B. Sojaöl,
0 bis 10 Gew.-%, vorzugsweise 2,5 Gew.-% pflanzliches Eiweiß, z.B. Sojaisolat,
0 bis 10 Gew.-%, vorzugsweise 3,5 Gew.-% pflanzliche Kohlenhydrate, z.B. Reismehl oder Weizenmehl,
0 bis 5 Gew.-%, vorzugsweise 0,7 Gew.-% Stabilisatoren,
0 bis 3 Gew.-%, vorzugsweise 1 Gew.-% Vitamin- oder Mineralstoffmischungen
besteht. - Durch die Hydrolyse der Milch wird die Lactose in Monosaccharide gespalten und damit tierartgerecht verdaubar gemacht. Durch die Auswahl der Fermentationsbakterien wird ein optimaler Geschmack des Endproduktes erreicht. Vorzugsweise werden Fermentationsbakterien der Stämme Lactobazyllus bulgaricus und/oder Streptococcus acidophilus und/oder Bifidobakterien eingesetzt, und zwar in einem Verhältnis von 25 : 75, vorzugsweise 50 : 50 unter Berücksichtigung von jeweils zwei der vorgenannten Stämme.

Ferner können der Milchmasse zusätzlich
Aminosäuremischungen,
Säuerungsmittel, z.B. D-Apfelsäure, L-Apfelsäure, Zitronensäure, D-Milchsäure oder L-Milchsäure,
Ballaststoffe, z.B. Zellulose,
Mineralstoffe, z.B. Calium, Calcium, Natrium, Phosphor,
Vitamine, z.B. A, D, B1, B2, B6, B12, E und
Spurenelemente, z.B. Eisen, Mangan, Kupfer, Zink
in der Größenordnung von insgesamt 0,5 bis 2 Gew.-% zugegeben werden.

Für den Fall, daß Fleischersatz Verwendung findet, lehrt die Erfindung, daß dieser Fleischersatz aus den folgenden Komponenten hergestellt ist:
5 bis 55 Gew.-%, vorzugsweise 40 Gew.-% hydrolisierte und fermentierte Milch,
0 bis 10 Gew.-%, vorzugsweise 5 Gew.-% pflanzliches Öl, z.B. Sojaöl,
0 bis 20 Gew.-%, vorzugsweise 9 Gew.-% pflanzliches Eiweiß, z.B. Sojamehl,
10 bis 60 Gew.-%, vorzugsweise 47 Gew.-% tierisches Eiweiß, Geflügelleber, Rinderleber o. dgl.,
0 bis 10 Gew.-%, vorzugsweise 4 Gew.-% tierische Fette, z.B. Talg und/oder Geflügelfett und/oder Milchfett,
0 bis 20 Gew.-%, vorzugsweise 10 Gew.-% Mehl, z.B. Reismehl oder Weizenmehl.

Außerdem sind dem Fleischersatz vorzugsweise Aromakomponenten, z.B. Fleischextrakte und/oder Proteinhydrolysate und/oder reduzierende Zucker wie Dextrose oder Xylose und Säureregulatoren, z.B. Säuerungsmittel und Emulgatoren wie Pyrophosphate und/oder Lecithin in der Größenordnung von insgesamt 0,5 bis 2 Gew.-% zugegeben.

Gegenstand der Erfindung ist auch ein Verfahren, welches zur Herstellung des erfindungsgemäßen Tierfutters und insbesondere Alleinfutters besonders geeignet ist. Dieses Verfahren ist dadurch gekennzeichnet, daß Fleischbestandteile oder Innereien in geschnittener Form mit Milchmasse in der beanspruchten Zusammensetzung gemischt werden und daß die Mischung in eine sterilisierungsfähige Umverpackung gefüllt und sterilisiert wird. Für die Verwendung von Fleischersatz sieht die Erfindung vor, daß Fleischersatz als pastöse Masse mittels Direktdampfbeaufschlagung koaguliert, anschließend in Stücke geschnitten und mit Milchmasse der beanspruchten Zusammensetzung gemischt und die Mischung ebenfalls in eine sterilisierungsfähige Umverpackung gefüllt und sterilisiert wird. Im Rahmen der Erfindung ist allerdings auch eine getrennte Abfüllung von Milchmasse und Fleisch bzw. Fleischersatz in Zwei-Kammer-Umverpackungen vorgesehen. Weiter lehrt die Erfindung, daß der in der für die Herstellung der Milchmasse zu verwendenden Milch vorhandene Milchzucker mittels Hydrolyse bis auf einen Restwert von maximal 0,2 Gew.-% Milchzucker reduziert wird und daß die so vorbehandelte Milch mit Fermentationskulturen versetzt und bis zu einem pH-Wert von pH 5 bis pH 4,2, vorzugsweise pH 4,5 fermentiert wird. Die Hydrolyse erfolgt zweckmäßigerweise im pH-neutralen Bereich zwischen pH 6,5 bis pH 6,8 bei einer Temperatur von 35 °C bis 44 °C. Als Fermentationskulturen werden bevorzugt Joghurtkulturen und Joghurt mild Kulturen verwendet.

## Patentansprüche

1. Tierfutter, insbesondere Alleinfutter für Katzen und Hunde, **gekennzeichnet durch** eine Zusammensetzung aus
50 bis 95 Gew.-%, vorzugsweise 75 Gew.-% Milchmasse,
5 bis 50 Gew.-%, vorzugsweise 25 Gew.-% Fleischbestandteile, z.B. Muskelfleisch und/oder Innereien und/oder
5 bis 50 Gew.-%, vorzugsweise 25 Gew.-% Fleischersatz.

2. Tierfutter nach Anspruch 1, dadurch gekennzeichnet, daß die Milchmasse aus
62 bis 95 Gew.-%, vorzugsweise 85 Gew.-% hydrolysierte und fermentierte Milch unter Verwendung von Fermentationsbakterien,
0 bis 10 Gew.-%, vorzugsweise 2,5 Gew.-% pflanzlisches Öl, z.B. Sojaöl,
0 bis 10 Gew.-%, vorzugsweise 2,5 Gew.-% pflanzliches Eiweiß, z.B. Sojaisolat,
0 bis 10 Gew.-%, vorzugsweise 3,5 Gew.-% pflanzliche Kohlenhydrate, z.B. Reismehl oder Weizenmehl,
0 bis 5 Gew.-%, vorzugsweise 0,7 Gew.-% Stabilisatoren,
0 bis 3 Gew.-%, vorzugsweise 1 Gew.-% Vitamin- und Mineralstoffmischungen
besteht.

3. Tierfutter nach Anspruch 1 oder 2, dadurch gekennzeichnet, daß zum Fermentieren der Milch Fermentationsbakterien der Stämme Lactobazyllus bulgaricus und/oder Streptococcus acidophilus und/oder Bifidobakterien eingesetzt werden, z.B. im Verhältnis von 25 : 75, vorzugsweise 50 : 50 bei Verwendung von jeweils zwei dieser Stämme.

4. Tierfutter nach einem der Ansprüche 1 bis 3, dadurch gekennzeichnet, daß der Milchmasse zusätzlich
Aminosäuremischungen,
Säuerungsmittel z.B. D-Apfelsäure, L-Apfelsäure, D-Milchsäure, L-Milchsäure, Zitronensäure,
Ballaststoffe, z.B. Zellulose,
Mineralstoffe, z.B. Calium, Calcium, Natrium, Phosphor,
Vitamine, z.B. A, D, B1, B2, B6, B12, E und
Spurenelemente, z.B. Eisen, Mangan, Kupfer, Zink
in der Größenordnung von insgesamt 0,5 bis 2 Gew.-% zugegeben sind.

5. Tierfutter nach einem der Ansprüche 1 bis 4, dadurch gekennzeichnet, daß der Fleischersatz aus folgenden Komponenten hergestellt ist:
5 bis 55 Gew.-%, vorzugsweise 40 Gew.-% hydrolisierte und fermentierte Milch,
0 bis 10 Gew.-%, vorzugsweise 5 Gew.-% pflanzliches Öl, z.B. Sojaöl,
0 bis 20 Gew.-%, vorzugsweise 9 Gew.-% pflanzliches Eiweiß, z.B. Sojamehl,
10 bis 60 Gew.-%, vorzugsweise 47 Gew.-% tierisches Eiweiß, Geflügelleber oder Rinderleber,
0 bis 10 Gew.-%, vorzugsweise 4 Gew.-% tierische Fette, z.B. Talg und/oder Geflügelfett und/oder Milchfett,
0 bis 20 Gew.-%, vorzugsweise 10 Gew.-% Mehl, z.B. Reismehl oder Weizenmehl.

6. Tierfutter nach einem der Ansprüche 1 bis 5, dadurch gekennzeichnet, daß dem Fleischersatz Aromakomponenten, z.B. Fleischextrakte und/oder Proteinhydrolysate und/oder reduzierende Zucker wie Dextrose oder Xylose und Säureregulatoren, z.B. Säuerungsmittel und Emulgatoren wie Pyrophosphate und/oder Lecithin in der Größenordnung von insgesamt 0,5 bis 2 Gew.-% zugegeben sind.

7. Verfahren zur Herstellung eines Tierfutters nach einem der Ansprüche 1 bis 6, dadurch gekennzeichnet, daß Fleischbestandteile oder Innereien in geschnittener Form mit Milchmasse gemischt werden, und daß die Mischung in eine sterilisierungsfähige Umverpackung gefüllt und sterilisiert wird.

8. Verfahren zur Herstellung eines Tierfutters nach einem der Ansprüche 1 bis 6, dadurch gekennzeichnet, daß Fleischersatz als pastöse Masse mittels Direktdampfbeaufschlagung koaguliert, anschließend in Stücke geschnitten und mit Milchmasse gemischt und die Mischung in eine sterilisierungsfähige Umverpackung gefüllt und sterilisiert wird.

9. Verfahren nach Anspruch 7 oder 8, dadurch gekennzeichnet, daß der in der für die Herstellung der Milchmasse zu verwendenden Milch vorhandene Milchzucker mittels Hydrolyse auf einen Restwert von maximal 0,2 Gew.-% Milchzucker reduziert wird und daß die so vorbehandelte Milch mit Fermentationskulturen versetzt und bis zu einem pH-Wert von pH 5 bis pH 4,6, vorzugsweise pH 4,5 fermentiert wird.

10. Verfahren nach einem der Ansprüche 7 bis 9, dadurch gekennzeichnet, daß die Hydrolyse im pH-neutralen Bereich zwischen pH 6,5 bis pH 6,8 bei einer Temperatur von 35 °C bis 44 °C erfolgt.

11. Verfahren nach einem der Ansprüche 7 bis 10, dadurch gekennzeichnet, daß als Fermentationskulturen Joghurtkulturen und Joghurt mild Kulturen verwendet werden.
